# EUROPÄISCHE PATENTSCHRIFT

(11) **EP 0 533 968 B1**
(45) Veröffentlichungstag und Bekanntmachung des Hinweises auf die Patenterteilung: **10.05.1995**
(21) Anmeldenummer: 91116170.1
(22) Anmeldetag: 23.09.1991
(51) Int. Cl.: G01G 13/12, G01G 13/285

(54) **Verfahren zum Überwachen von Fülleinrichtungen bei Differentialdosierwaagen**
Method for controlling filling devices in loss-in-weight feeders
Procédé pour contrôler des dispositifs de remplissage dans des balances à dosage différentiel

(43) Veröffentlichungstag der Anmeldung: 31.03.1993
(73) Patentinhaber: CARL SCHENCK AG, D-64273 Darmstadt (DE)
(72) Erfinder: Allenberg, Bernd, Dr., W-6100 Darmstadt (DE); Kohlmüller, Klaus, W-6107 Reinheim (DE)

(56) Entgegenhaltungen:
- EP-A- 0 126 662
- DE-A- 2 810 810
- US-A- 4 582 150
- PATENT ABSTRACTS OF JAPAN vol. 7, no. 216 (P-225)(1361) 24. September 1983 & JP-A-58108411

## Beschreibung

Die Erfindung betrifft ein Verfahren zum Überwachen von Fülleinrichtungen bei Differentialdosierwaagen gemäß dem Oberbegriff des Patentanspruchs 1, sowie Vorrichtungen zur Durchführung des Verfahrens gemäß dem Oberbegriff des Patentanspruchs 7 oder 8.

Differentialdosierwaagen bestehen aus einem Vorratsbehälter mit einem daran angeschlossenen Austragsorgan, die auf Wägezellen gelagert sind. Während der Entnahmephase arbeitet das System nach der geregelten Materialentnahme, bei dem die Förderstärke aus einer Gewichtsabnahme pro Zeiteinheit bestimmt wird. Bei einem bestimmten Entleerungsgrad des Vorratsbehälters ist es allerdings in zyklischen Abständen erforderlich, diesen zu befüllen. Während des Befüllvorganges wird die geregelte gravimetrische Dosierung abgeschaltet und für einen gewissen Zeitraum, der für die Befüllung vorgesehen ist, auf eine volumetrische Dosierung umgeschaltet.

Zur Befüllung des Vorratsbehälters ist meist oberhalb der Waage ein Vorbunker angeordnet, der mittels einer Füllklappe in den Vorratsbehälter entleert wird. Dabei ist es wichtig, daß die Füllklappe im geschlossenen Zustand tatsächlich kein Schüttgut mehr durchläßt, da dieses in der gravimetrischen Phase das Meßergebnis der Gewichtsabnahme pro Zeiteinheit verfälscht. Derzeit wird die Position der Füllklappe über Endschalter festgestellt. Die Funktion im geschlossenen Zustand kann aber allein durch Endschalter nicht überwacht werden, da diese die Klappenstellung nur punktuell überprüfen. Durch Verschleiß ober Verbiegung kann es trotzdem zu nachfließendem Schüttgut kommen. Dies äußert sich so, daß nach Beendigung der Füllphase noch für eine gewisse Zeit Schüttgut nachrieselt. In der Regel verschließt sich dieser Rieselkanal jedoch nach einiger Zeit selbsttätig. Bei den bekannten Ausführungen wartet man daher nach der Rückmeldung des geschlossenen Zustand durch die Klappe noch einige Zeit bis zur Umschaltung in die gravimetrische Dosierung.

Aus der DE-A-28 10 810 ist ein Verfahren zum genauen Dosieren von Schüttgütern bekannt, die den Nachlauffehler nach dem Schließen eines Chargierorgans berücksichtigen. Dabei wird vor Erreichung des Mengensollwertes der Chargiervorgang unterbrochen und die während der Unterbrechung zufließende Gutmenge als jeweils aktueller Nachlauffehler mit Hilfe einer Waage bestimmt. Danach wird die Zuführung fortgesetzt und die Chargierung dann unterbrochen, wenn die Addition des Istwertes und der ermittelten Nachlaufmenge den gewünschten Sollwert ergibt. Das Verfahren arbeitet nur dann, wenn nach einer endlichen Zeit weder Schüttgut ein- noch austritt.

Der Erfindung liegt deshalb die Aufgabe zugrunde, ein Verfahren und Einrichtungen zu schaffen, durch das die Sperrfunktion der Füllklappe an Differentialdosierwaagen überwacht wird, bei denen sich auch bei geschlossener Füllklappe der Füllstand durch den Schüttgutaustrag ständig verändert.

Diese Aufgabe wird durch die im Patentanspruch 1, 7 oder 8 angegebene Erfindung gelöst. Weiterbildungen und vorteilhafte Ausführungsbeispiele der Erfindung sind in den abhängigen Ansprüchen angegeben.

Die Erfindung hat den Vorteil, daß durch die Auswertung der von den vorhandenen Wägezellen abgegebenen Meßsignale auf einfache Art und Weise die Funktion der Füllklappe überwacht werden kann. Dazu ist lediglich eine einfache Auswerteschaltung notwendig, die den Befüllungsverlauf bei einwandfreiem Betriebsverlauf speichert und diesen Verfahrensvorgang mit den weiteren Befüllungsvorgängen vergleicht. Sobald eine nennenswerte Abweichung von dieser Sollfunktion der Füllklappe festgestellt wird, liegt damit eine Störung vor und kann signalisiert werden. Eine derartige Funktionsüberwachung der Füllklappe ist insbesondere deshalb vorteilhaft, weil derartige Differentialdosierwaagen in Produktionsprozessen integriert sind, bei denen ein permanentes Nachrieseln von zu wiegenden Schüttgütern eine erhöhte Förderstärke zur Folge hätte, die sonst ohne weiteres nicht bemerkbar wäre und bei dem kontinuierlichen Wägeverfahren zu großem wirtschaftlichen Schaden führen könnte.

Die Erfindung hat weiterhin noch den Vorteil, daß derartige Überwachungsvorrichtungen auch nachträglich in vorhandene Differentialdosierwaagen nachrüstbar sind, um insbesondere ältere Dosiervorrichtungen zu überwachen, bei denen meist derartige Dosierklappen nur mit erheblichem Montageaufwand überprüfbar sind.

Durch die Überwachung mit Hilfe der Wägezellensignale ermöglicht die Erfindung eine automatische Überwachung derartiger Füllklappen über deren gesamte Betriebsdauer und gestattet gleichzeitig, festgestellte Fehler automatisch zu signalisieren oder die entsprechenden Anlagenteile sofort abzuschalten, um eventuell mögliche Fehler zu verhindern.

Weiterhin vorteilhaft ist auch die Möglichkeit, das tatsächliche Ende des Befüllungszustandes festzustellen, um von dem volumetrischen Dosiervorgang zum frühestmöglichen Zeitpunkt wieder in gravimetrische Dosierung umzuschalten. Wegen der resultierenden Verkürzung der volumetrischen Phase steigt daher die Dosiergenauigkeit.

Die Erfindung wird anhand eines Ausführungsbeispiels, das in der Zeichnung dargestellt ist, näher erläutert. Es zeigen:
- Fig. 1:: eine Differentialdosierwaage mit Vorratsbehälter und darüber angeordnetem Vorbunker, der durch eine Füllklappe verschließbar ist;
- Fig. 2:: einen Gewichtsverlauf einer Differentialdosierwaage während und nach dem Befüllen des Vorratsbehälters;
- Fig. 3:: das Diagramm des Massenflusses in den Vorratsbehälter während und nach deren Befüllung;
- Fig. 4:: ein Blockschaltbild einer Auswerteschaltung für die Füllklappenüberwachung;
- Fig. 5:: ein Blockschaltbild einer Füllklappenüberwachung mit Hilfe eines vorgebbaren mathematischen Modells als Referenzverlauf.

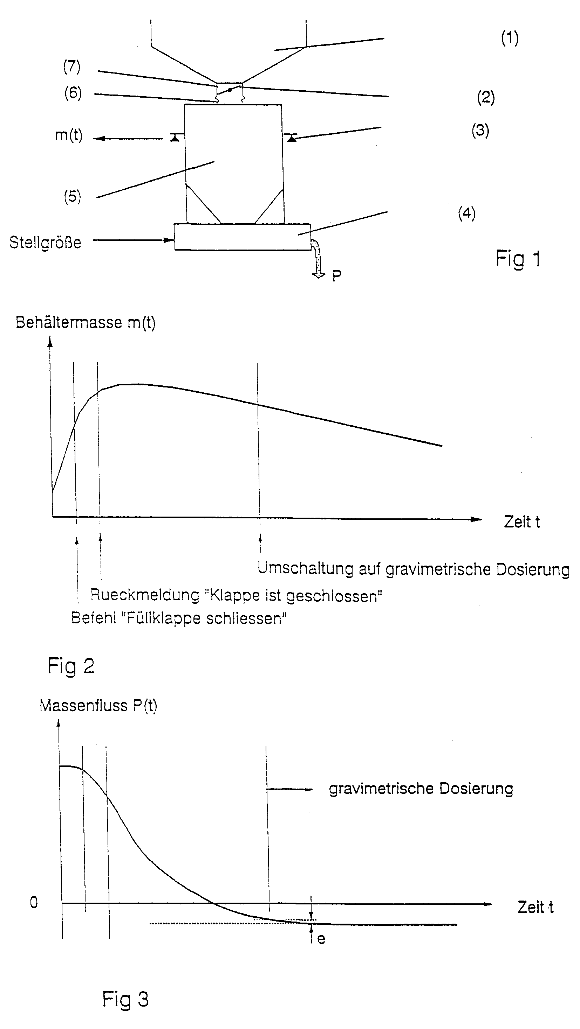

Die Fig. 1 der Zeichnung zeigt schematisch eine Differentialdosierwaage, die aus einem Vorratsbehälter 5 besteht, der auf Wägezellen 3 gelagert ist, und an seinem Ausflußende mit einem Austragsorgan 4 verbunden ist, das den geregelten Materialaustrag bewirkt. Der Vorratsbehälter 5 wird durch einen oberhalb angeordneten Vorbunker über eine Verschließeinrichtung in zyklischen Abständen mit dem zu dosierenden Schüttgut befüllt.

Der Vorbunker 1 dient zur Aufnahme größerer Mengen des zu dosierenden Schüttgutes. Er ist oberhalb des Vorratbehälters 5 angeordnet und an seinem unteren Teil mit einer Entleerungsöffnung versehen, die mit Hilfe einer Verschließeinrichtung verschließbar ist. Die Verschließeinrichtung ist als Füllklappe 2 ausgebildet, die aber auch als Zellenradschleuse oder als gleichwirkende Ausführungen ausgebildet sein kann. Die Füllklappe ist mit nicht dargestellten Endschaltern versehen, die die Endstellungen im geöffneten und geschlossenen Zustand signalisieren. Die Füllklappe ist z. B. in einem rohrförmigen Abfüllstutzen 7 angeordnet. Dieser kann aber auch rechteckförmig oder oval ausgebildet sein. Der Vorbunker ist nicht kraftschlüssig mit dem Vorratsbehälter der Differentialdosierwaage verbunden. In der Regel wird deshalb der Abfüllstutzen durch einen Gummibalg 6 mit dem Vorratsbehälter gekoppelt sein.

Der Vorratsbehälter ist in der Regel zylinderförmig ausgebildet und besitzt an seinem unteren Teil eine konisch verlaufende Austragsöffnung, die das im Vorratsbehälter 5 befindliche Dosiergut in ein Austragsorgan 4 leitet. Das Austragsorgan ist fest mit dem Vorratsbehälter verbunden und befindet sich unter dessen Austragsöffnung. Das Austragsorgan besitzt einen nicht dargestellten separaten Antrieb, der fest mit dem Austragsorgan oder dem Vorratsbehälter verbunden ist. Das Austragsorgan kann als Dosierschnecke, Dosierspirale, Schwingförderrinne, Förderband oder auch als Pumpe ausgebildet sein.

Der Vorratsbehälter sowie die an ihm befestigten Austragsorgane samt Antrieb stützen sich mit ihrem gesamten Gewicht auf eine oder mehrere Wägezellen 3 ab. Die Wägezellen wandeln die Auflagerkraft in ein elektrisches Signal um, das dem Gewicht der mit dem Vorratsbehälter verbundenen Teile samt dem Inhalt des Vorratsbehälters entspricht. Da während des Dosierbetriebs das Austragsorgan fortlaufend die im Vorratsbehälter befindlichen Schüttgüter austrägt, erfolgt eine dem Dosierstrom entsprechende Gewichtsabnahme der Dosiereinrichtung. Durch bekannte Differenzierschaltungen in Auswerteeinrichtungen wird daraus der Materialfluß pro Zeiteinheit als Förderstärke berechnet und in entsprechenden Anzeigeeinrichtungen dargestellt.

In herkömmlichen Differentialdosierwaagen stellt die gemessene Förderstärke den Istwert dar, der in der Auswerteeinrichtung mit einer einstellbaren Sollförderstärke verglichen wird und daraus eine Stellgröße bildet, die den Antrieb des Austragsorgans nachregelt. Dadurch wird eine geregelte Materialentnahme pro Zeiteinheit aus dem Vorratsbehälter erreicht, die die Dosierung des Schüttgutes darstellt. Eine derartige geregelte Materialentnahme aus dem Vorratsbehälter ist allerdings nur solange möglich, wie die Schüttgutmenge in dem Vorratsbehälter einen festlegbaren minimalen Schüttgutvorrat nicht unterschreitet. Dann ist es erforderlich, daß der Vorratsbehälter von Seiten des Vorbunkers erneut befüllt wird. Während der Befüllung wird die vorgenannte gravimetrische Dosierung unterbrochen und durch eine vorherberechnete volumetrische Dosierung ersetzt. Da die volumetrische Dosierung einen gravimetrisch ungeregelten Materialfluß darstellt, wird dieser Zeitraum möglichst klein gehalten, um die Dosiergenauigkeit nicht nennenswert zu beeinträchtigen. Bei einem bestimmten Mindestgewicht wird deshalb von der Auswerteeinrichtung der geregelte gravimetrische Dosierbetrieb abgeschaltet und mit gleicher oder an den Behälterfüllstand angepaßter Förderstärke volumetrisch weiterhin Schüttgut ausgetragen.

Anschließend wird die Füllklappe zum Vorbunker geöffnet, so daß der Vorratsbehälter vollgefüllt werden kann. Während dieses Füll- und Dosiervorgangs wird das Gewicht der Dosiereinrichtung von den Wägezellen erfaßt und dann die Füllklappe geschlossen, wenn der Vorratsbehälter eine vorgegebene Schüttgutmenge enthält. Sobald das vorgegebene Maximalgewicht der Dosiereinrichtung erreicht wird, steuert die Auswerteeinrichtung die Füllklappe in dessen Sperrfunktion. Während und nach dem Schließvorgang tritt allerdings noch eine bestimmte Schüttgutmenge vom Vorbunker in den Vorratsbehälter. Deshalb überlagern sich während des Schließvorgangs zwei verschiedene Materialströme. Zum einen erfolgt eine volumetrische Dosierung aus dem Dosierorgan mit einer bestimmten Förderstärke. Zum anderen erfolgt ein gewisser Nachlaufstrom ab dem Schließzeitpunkt der Förderklappe, der bis zu deren vollständiger Sperrfunktion versiegt. Insgesamt entsteht deshalb ein Behältergewichtsverlauf m(t), wie es in Fig. 2 der Zeichnung dargestellt ist. Dort ist das Behältergewicht über der Zeit aufgezeichnet. Während des Füll- und Dosiervorgangs ist linksseitig ein kontinuierliches Ansteigen des Behältergewichts erkennbar. Nach dem Befehlssignal, die Füllklappe zu schließen, steigt das Behältergewicht noch weiter an, wobei der Anstieg deutlich vermindert wird. Bei ordnungsgemäßem Betrieb der Füllklappe wird der Schüttgutstrom aus dem Vorbunker in dem Zeitpunkt, in dem die Klappe vollständig geschlossen ist, unterbrochen. Allerdings ist gemäß Fig. 2 der Zeichnung auch danach noch ein geringer Anstieg des Behältergewichts für kurze Zeit festzustellen. Hierbei handelt es sich um einen Nachlauf des Schüttguts, das zum Zeitpunkt, an dem die Füllklappe vollständig geschlossen ist, noch im Fall befindet und noch nicht auf der Oberfläche des übrigen Füllgutes im Vorratsbehälter angelangt ist. Während dieses Zeitraumes überlagert sich der nachlassende Füllgutstrom aus dem Einfüllschacht mit dem ausgetragenen Förderstrom des Förderorgans, so daß eine Umkehrung des Gewichtsverlaufes erkennbar ist. Ab dem Umkehrzeitpunkt überwiegt die Entnahme aus dem Vorratsbehälter durch das Dosierorgan, so daß der zeitliche Gewichtsverlauf näherungsweise linear abnimmt. Erst wenn diese Gewichtsabnahme einen kontinuierlichen linearen Verlauf einnimmt, darf wieder auf den gravimetrisch geregelten Dosierbetrieb umgeschaltet werden.

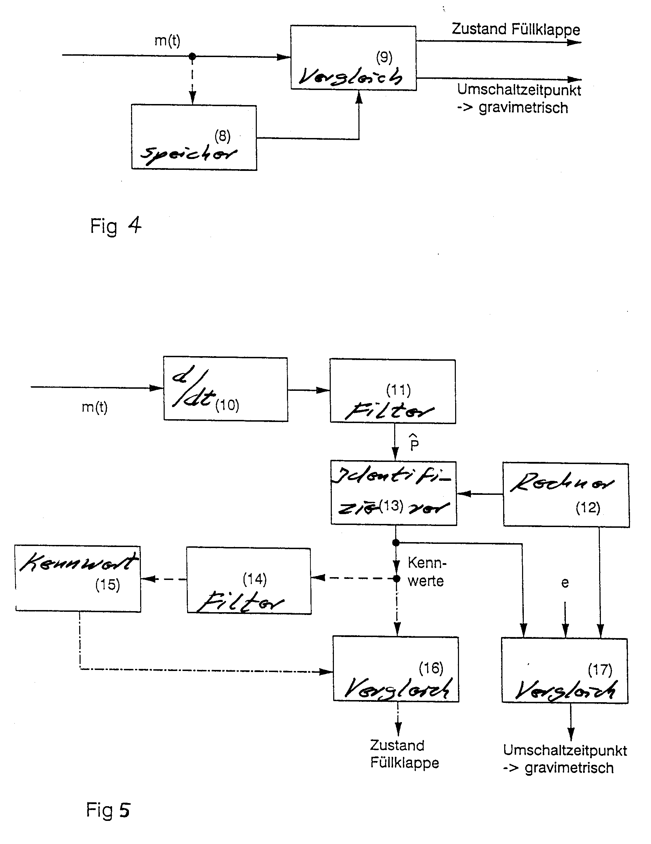

Ein derartiger Gewichtsverlaufs während des Einfüllvorgangs wird bei ordnungsgemäßer Funktion der Füllklappensteuerung in einer Auswerteschaltung nach Fig. 4 der Zeichnung während einer oder mehrerer Befüllungen ermittelt und in deren Speicherschaltung 8 abgespeichert. Ein derartig abgespeicherter Gewichtsverlauf bei ordnungsgemäßer Klappenfunktion wird als Referenzverlauf bestimmt und bei jedem sich wiederholenden Befüllungsvorgang mit dem jeweils ermittelten Gewichtsverlauf in einer Vergleicherschaltung 9 der Auswerteschaltung verglichen. Dabei kann ein derartiger Vergleich auch nur in bestimmten zeitlichen oder zahlenmäßigen Abständen zu einem vorhergehenden Vergleich durchgeführt werden. Wird in der Vergleicherschaltung 9 festgestellt, daß der ermittelte Gewichtsverlauf mit dem festgelegten Referenzverlauf weitgehend übereinstimmt, so stellt dies eine einwandfreie Funktion der Füllklappe dar. Sollte es hingegen vorkommen, daß die Füllklappe nicht einwandfrei schließt, so käme es zu einem kontinuierlichen Nachrieseln des Schüttgutes. Dadurch würde sich z. B. der Umkehrpunkt zeitlich verschieben als auch die spätere kontinuierliche Gewichtsabnahme einen weniger steilen Verlauf aufweisen. Durch die Auswerteschaltung würde eine Abweichung von dem Referenzgewichtsverlauf festgestellt und in einer entsprechenden Anzeigeeinrichtung signalisiert werden.

Die Auswertung könnte allerdings auch so erfolgen, daß nur wenige Punkte des Referenzgewichtsverlaufs mit den entsprechenden Punkten des festgestellten Gewichtsverlaufs verglichen würden, um den Auswerteaufwand entsprechend gering zu halten. So könnte bereits eine zeitliche Abweichung der beiden Umkehrpunkte oder eine entsprechende Abweichung beider Neigungen auf eine nicht vollständig geschlossene Füllklappe hinweisen. Dieses Verfahren eignet sich gut für Schüttgüter mit weitgehend gleichbleibenden Fließeigenschaften und für eine Betriebsart mit konstanten Förderleistungssollwert.

Da die Überlagerung des Restlaufs bei geschlossener Füllklappe mit dem volumetrischen Austragsverhalten mathematisch nachvollziehbar ist, kann der Referenzverlauf in einer anderen Ausführungsform nach Fig. 5 der Zeichnung als mathematisches Modell nachgebildet werden. Bei dieser Ausführungsform wird eine Vergleichbarkeit mit wenigen Kenngrößen des tatsächlichen Gewichtsverlaufs ermöglicht.

In Fig. 5 der Zeichnung ist eine zweite Auswerteschaltung dargestellt, die ein derartiges Modell bildet und dies mit dem ermittelten Gewichtsverlauf jeweils vergleicht. Ein derartiges parametrisches, mathematisches Modell, das den prinzipiellen Verlauf des Massenflusses P während der Befüllung nachbildet, ist durch eine Rechenschaltung 12 vorgegeben. Das Modell besteht zum einen aus mindestens einer mathematischen Funktion und zum anderen aus mindestens einem Parameter, z. B. einem Verstärkungsfaktor. Ein Schätzwert für den Massenstrom wird mit bekannten Einrichtungen, z. B. einem Differenzierer 10 und einem Filter 11 aus dem gemessenen Verlauf der Masse des Vorratsbehälters ermittelt. Bei einem guten Zustand der Füllklappe wird der Zeitverlauf des so geschätzten Massenstroms während einem oder mehreren Füllzyklen gemessen. Zu jedem gemessenen Zeitverlauf findet eine Identifizierschaltung 13 die Parameter, die das mathematische Modell so konfigurieren, daß die Abweichung zwischen Modell und geschätzten Verlauf des Massenflusses an den Abtastzeitpunkten (z. B. im Sinne der Summe kleinsten quadratischen Abweichungen) minimal wird. Die so bestimmten Parameter sind die Kenngrößen des gemessenen Zeitverlaufs des Massenstromes P bei der i-ten Befüllung des Behälters, der in Fig. 3 der Zeichnung dargestellt ist. Aus der Folge der von der Identifiziererschaltung 13 erzeugten Kennwerten mehrerer Befüllungen errechnet eine Filterschaltung 14 einen Mittelwert für jeden Kennwert, der in einem Kennwertspeicher 15 abgelegt wird. Die Werte im Kennwertspeicher 15 geben somit den Zustand des Systems bei intakter Klappe wieder.

Die im anschließenden Normalbetrieb von der Identifizierschaltung 13 bestimmten Kennwerte werden mit den im Kennwertspeicher 15 abgelegten Kennwerten einer einwandfreien Befüllung verglichen. Weichen die Kennwerte um mehr als eine für jeden Parameter getrennt einzustellenden Schranke ab, so erkennt ein Vergleicher 16, daß die Füllklappe nicht korrekt schließt. Er meldet den Zustand der Klappe, der mit herkömmlichen Anzeigeeinrichtungen darstellbar ist oder als Klappenfehler entsprechend signalisiert werden kann.

Mit Hilfe der Kennwerte, des mathematischen Modells und einer einstellbaren Schranke e kann mit Hilfe einer zweiten Vergleichsschaltung 17 der günstigste Zeitpunkt errechnet werden, zu dem eine Umschaltung in den gravimetrischen Betrieb erfolgen soll. Dazu wird aus dem vorgegebenen Modell der Rechenschaltung 12 und den Kennwerten als Parameter ein Modellzeitverlauf der Summe aus der Befüllförderstärke und der Austragsförderstärke entsprechend dem Verlauf nach Fig. 3 der Zeichnung gebildet. Aus dem vorberechenbaren Modellzeitverlauf ermittelt die Vergleicherschaltung 17 den Zeitpunkt, an dem die Befüllförderstärke die vorgegebene Schranke e unterschreitet. Der so bestimmte Zeitpunkt kann z. B. für die Umschaltung in den gravimetrischen Betrieb verwendet werden. Dadurch kann der Zeitraum des volumetrischen Dosierbetriebs verkürzt werden, wodurch eine Erhöhung der Dosiergenauigkeit erzielbar ist.

Eine derartige Füllklappenüberwachungseinrichtung kann auch bei sogenannten Kontrollmeßbunkern vor kontinuierlichen Waagen wie Dosierbandwaagen verwendet werden. Derartige Kontrollmeßbunker dienen zur Überprüfung kontinuierlicher Wägesysteme. Dazu ist der Kontrollmeßbunker als ein Vorratsbehälter ausgebildet unter dem z. B. eine Dosierbandwaage angeordnet ist, die die Förderstärke mit Hilfe eines separaten Wägesystems ermittelt. Mit Hilfe einer Auswerteeinrichtung wird nun der aus dem Kontrollmeßbunker abgezogene Gewichtswert mit dem Gewichtswert des in diesem Zeitraum von der Dosierbandwaage ermittelten verglichen. Dabei kommt es darauf an, daß die Verschließeinrichtung zwischen einem Vorbunker und dem Kontrollmeßbunker vollständig geschlossen wird. Eine derartige Überwachung der Verschließeinrichtung kann auch mit dem vorstehend beschriebenen Verfahren zum Überwachen von Fülleinrichtungen vorgenommen werden.

## Patentansprüche

1. Verfahren zum Überwachen von Fülleinrichtungen bei Differentialdosierwaagen, bei denen zwischen einem Vorbunker (1) und einem Vorratsbehälter (5) eine Verschließeinrichtung (2) zum zyklischen Auffüllen des Vorratsbehälters (5) vorgesehen ist, die bei einer vorbestimmbaren Mindestfüllung des Vorratsbehälters geöffnet und bei einer vorbestimmbaren Maximalfüllung geschlossen wird, dadurch gekennzeichnet, daß während des Füll- und Dosiervorgangs der Gewichtsverlauf des Wägesystems kontinuierlich ermittelt und mit einem vorgegebenen Referenzverlauf verglichen wird und bei einer festlegbaren Abweichung dies als Defekt der Verschließeinrichtung signalisierbar oder anzeigbar ist.

2. Verfahren zum Überwachen von Fülleinrichtungen bei Differentialdosierwaagen nach Anspruch 1, dadurch gekennzeichnet, daß der Referenzverlauf einen Gewichtsverlauf des Wägesystems darstellt, bei dem die Verschließeinrichtung als Füllklappe ausgebildet ist, die vor Beginn des Auffüllvorgangs vollständig geschlossen ist und bei Beginn des Auffüllvorgangs vollständig geöffnet wird und bei Beendigung des Füllvorgangs vollständig geschlossen wird, so daß kein Schüttgut fortlaufend nachrieseln kann.

3. Verfahren zum Überwachen von Fülleinrichtungen bei Differentialdosierwaagen nach Anspruch 1, dadurch gekennzeichnet, daß der Referenzverlauf ein vorgebbares mathematisches Modell darstellt, das mit Hilfe von Kenngrößen in einer Rechenschaltung ermittelt wird und dessen Kenngröße während des Füll- und Dosiervorgangs mit denen des Gewichtsverlauf des Wägesystems verglichen werden und bei vorgegebener Abweichung dies signalisier- und/oder anzeigbar ist.

4. Verfahren zum Überwachen von Fülleinrichtungen bei Differentialdosierwaagen nach einem der Ansprüche 1 und 2, dadurch gekennzeichnet, daß der vorgegebene Referenzverlauf in Form von zeitlich unterschiedlichen markanten Meßpunkten vorgegeben wird, die mit den entsprechenden zeitlich beabstandeten Gewichtsverlaufsmeßpunkten des Wägesystems verglichen werden.

5. Verfahren zum Überwachen von Fülleinrichtungen bei Differentialdosierwaagen nach einem der vorhergehenden Ansprüche, dadurch gekennzeichnet, daß eine Füllklappenüberwachung bei jedem Füllvorgang der Differentialdosierwaage oder in zeitlich- oder mengenmäßig zyklischen Abständen durchgeführt wird.

6. Verfahren zum Überwachen von Fülleinrichtungen bei Differentialdosierwaagen nach einem der vorhergehenden Ansprüche, dadurch gekennzeichnet, daß aus dem Vergleich des Gewichtsverlaufs des Wägesystems bzw. Kennwert und dem vorgegebenen Referenzverlauf bzw. Kennwert das Ende des Befüllungszeitraums ermittelt wird, woraus ein Zeitpunkt bestimmbar ist, der zur Umschaltung des volumetrischen Dosierbetriebs in den gravimetrischen Dosierbetrieb verwendbar ist.

7. Vorrichtung zum Überwachen von Fülleinrichtungen bei Differentialdosierwaagen zur Durchführung des Verfahrens nach einem der Ansprüche 1 bis 5, bei dem eine Differentialdosierwaage mit Vorratsbehälter vorgesehen ist, die unterhalb eines Vorbunkers angeordnet und mit diesem über eine Verschließeinrichtung verbunden ist, wobei der Vorbunker mit der Differentialdosierwaage keine kraftschlüssige Verbindung aufweist, dadurch gekennzeichnet, daß die Wägezellen der Differentialdosierwaage mit einer Auswerteschaltung verbunden sind, die wenigstens eine Speicherschaltung (8) und eine Vergleicherschaltung (9) enthält, wobei die Speicherschaltung (8) zur Speicherung eines Referenzverlaufs dient, während die Vergleicherschaltung (9) so ausgebildet ist, daß sie den Gewichtsverlauf des Wägesystems mit dem Referenzverlauf vergleicht und bei Überschreitung einer bestimmten Abweichung ein Signal erzeugt, das zur Darstellung eines Defekts der Verschießeinrichtung dient.

8. Vorrichtung zum Überwachen von Fülleinrichtungen bei Differentialdosierwaagen zur Durchführung des Verfahrens nach einem der Ansprüche 1 bis 6, bei dem eine Differentialdosierwaage mit Vorratsbehälter vorgesehen ist, die unterhalb eines Vorbunkers angeordnet und mit diesem über eine Verschließeinrichtung verbunden ist, wobei der Vorbunker mit der Differentialdosierwaage keine kraftschlüssige Verbindung aufweist, dadurch gekennzeichnet, daß eine Auswerteeinrichtung vorgesehen ist, die einen Differenzierer (10), einen Filter (11), eine Rechenschaltung (12), eine Identifizierungsschaltung (13), eine Filterschaltung (14), einen Kennwertspeicher (15), einen Vergleicher (16) und eine zweite Vergleicherschaltung (17) enthält, die so ausgebildet sind, daß sie die Kennwerte des Gewichtsverlaufs des Wägesystems mit den Kennwerten eines mathematischen Modells als Referenzverlauf vergleichen und einen Defekt der Verschließeinrichtung signalisieren, wenn eine vorgegebene Abweichung beim Vergleich überschritten ist.

9. Vorrichtung zum Überwachen von Füllklappeneinrichtungen bei Differentialdosierwaagen nach einem der Ansprüche 7 oder 8, dadurch gekennzeichnet, daß die Auswerteeinrichtung so ausgebildet ist, daß aus den ermittelten Meßwerten während des Füll- und Dosiervorgangs unter Berücksichtigung des Referenzverlaufs das Ende des Befüllungszeitraums ermittelbar ist, wobei zu diesem Zeitpunkt ein Signal erzeugbar ist, das zur Umschaltung des volumetrischen Dosierbetriebs in den gravimetrischen Dosierbetrieb dient.

## Claims

1. Method of monitoring filling arrangements in differential proportioning weighers, in which a closure device (2) is provided between a primary bunker (1) and a storage bin (5) for cyclical filling of the storage bin (5), which closure device is opened at a predeterminable minimum filling level of the storage bin and closed at a predeterminable maximum filling level, characterised in that during the filling and proportioning operation the weight trend of the weighing system is continuously determined and compared with a predetermined reference trend and when a deviation can be established this can be signalled or indicated as a defect of the closure device.

2. Method of monitoring filling arrangements in differential proportioning weighers according to Claim 1, characterised in that the reference trend represents a weight trend of the weighing system in which the closure device is constructed as a filling flap which is completely closed before the filling operation begins and when the filling operation begins it is completely opened and when the filling operation ends it is completely closed so that no bulk material can continue to trickle through.

3. Method of monitoring filling arrangements in differential proportioning weighers as claimed in Claim 1, characterised in that the reference trend represents a predeterminable mathematical model which is determined with the aid of characteristic quantities in an arithmetic circuit and of which the characteristic quantity is compared during the filling and proportioning operation with those of the weight trend of the weighing system and in the event of a predetermined deviation this can be signalled and/or indicated.

4. Method of monitoring filling arrangements in differential proportioning weighers according to one of Claims 1 and 2, characterised in that the predetermined reference trend is predetermined in the form of marked measuring points at different times which are compared with the corresponding weight trend measuring points of the weighing system at time intervals.

5. Method of monitoring filling arrangements in differential proportioning weighers as claimed in one of the preceding claims, characterised in that monitoring of the filling flap is carried out during each filling operation of the differential proportioning weigher or at intervals which are cyclical in terms of time or quantity.

6. Method of monitoring filling arrangements in differential proportioning weighers according to one of the preceding claims, characterised in that from the comparison of the weight trend of the weighing system or characteristic value and the predetermined reference trend or characteristic value the end of the filling period is determined, and from this a point of time can be determined which can be used for switching over from volumetric proportioning to gravimetric proportioning.

7. Apparatus for monitoring filling arrangements in differential proportioning weighers for carrying out the method according to one of Claims 1 to 5, in which a differential proportioning weigher is provided with a storage bin, the weigher is disposed below a primary bunker and connected thereto by way of a closure device, and the primary bunker has no force-locking connection to the differential proportioning weigher, characterised in that the weighing cells of the differential proportioning weigher are connected to an evaluation circuit which contains at least one storage circuit (8) and a comparator circuit (9), wherein the storage circuit (8) serves for storing a reference trend, whilst the comparator circuit (9) is constructed so that it compares the weight trend of the weighing system with the reference trend and, when a predetermined deviation is exceeded, produces a signal which serves to represent a defect of the closure device.

8. Apparatus for monitoring filling arrangements in differential proportioning weighers for carrying out the method according to one of Claims 1 to 6, in which a differential proportioning weigher is provided with a storage bin, the weigher is disposed below a primary bunker and connected thereto by way of a closure device, and the primary bunker has no force-locking connection to the differential proportioning weigher, characterised in that an evaluation arrangement is provided which comprises a differentiator (10), a filter (11), an arithmetic circuit (12), an identification circuit (13), a filter circuit (14), a characteristic value store (15), a comparator (16) and a second comparator circuit (17), which are constructed so that they compare the characteristic values of the weight trend of the weighing system with the characteristic values of a mathematical model as reference trend and signal a defect in the closure device when a predetermined deviation is exceeded during the comparison.

9. Apparatus for monitoring filling flap arrangements in differential proportioning weighers according to one of Claims 7 or 8, characterised in that the evaluation arrangement is constructed so that the end of the filling period can be determined from the determined measurement values during the filling and proportioning operation, taking account of the reference trend, and at this time a signal can be produced which serves for switching over from volumetric proportioning to gravimetric proportioning.

## Revendications

1. Procédé destiné à contrôler des dispositifs de remplissage dans des balances à dosage différentiel, dans lesquelles il est prévu entre un pré-réservoir (1) et un réservoir (5) un dispositif de fermeture (2) pour le remplissage cyclique du réservoir (5), qui est ouvert pour un remplissage minimal prédéterminé du réservoir et est fermé pour un remplissage maximal prédéterminé, caractérisé en ce que pendant l'opération de remplissage et de dosage, la courbe du poids du système de pesée est déterminée en continu et est comparée à une courbe de référence donnée et en cas d'écarts à définir, ceci est signalé ou affiché en tant que défaut du dispositif de fermeture.

2. Procédé destiné à contrôler des dispositifs de remplissage dans des balances à dosage différentiel selon la revendication 1, caractérisé en ce que la courbe de référence constitue une courbe de poids du système de pesée, dans lequel le dispositif de fermeture est conçu sous la forme d'un clapet de remplissage, qui avant le début de l'opération de remplissage est totalement fermé et qui au début de l'opération de remplissage est totalement ouvert et qui à la fin de l'opération de remplissage est totalement fermé, ce qui fait que le produit en vrac ne peut continuer de s'écouler en permanence.

3. Procédé destiné à contrôler des dispositifs de remplissage dans des balances à dosage différentiel selon la revendication 1, caractérisé en ce que la courbe de référence constitue un modèle mathématique donné, qui est déterminé à l'aide de grandeurs caractéristiques dans un circuit de calcul et dont les grandeurs caractéristiques sont comparées pendant l'opération de remplissage et de dosage avec celles de la courbe de poids du système de pesée et en cas d'écart donné, ceci peut être signalé et/ou affiché.

4. Procédé destiné à contrôler des dispositifs de remplissage dans des balances à dosage différentiel selon l'une des revendications 1 et 2, caractérisé en ce que la courbe de référence donnée est donnée sous la forme de points de mesure marquants, différents dans le temps, qui sont comparés aux points de mesure correspondants, espacés dans le temps, de la courbe de poids du système de pesée.

5. Procédé destiné à contrôler des dispositifs de remplissage dans des balances à dosage différentiel selon l'une des revendications précédentes, caractérisé en ce qu'un contrôle du clapet de remplissage est effectué à chaque opération de remplissage de la balance à dosage différentiel ou à des intervalles cycliques de temps ou de quantité.

6. Procédé destiné à contrôler des dispositifs de remplissage dans des balances à dosage différentiel selon l'une des revendications précédentes, caractérisé en ce qu'à partir de la comparaison entre la courbe de poids du système de pesée ou la valeur caractéristique et la courbe de référence donnée ou la valeur caractéristique, on détermine la fin de la période de remplissage, à partir de laquelle on peut déterminer un instant qui peut être utilisé pour passer du dosage volumétrique au dosage gravimétrique.

7. Dispositif destiné à contrôler des dispositifs de remplissage dans des balances à dosage différentiel pour la mise en oeuvre du procédé selon l'une des revendications 1 à 5, dans lequel il est prévu une balance à dosage différentiel avec réservoir, qui est placé au-dessous d'un pré-réservoir et qui est relié à celui-ci par un dispositif de fermeture, le pré-réservoir n'ayant pas de liaison par force avec la balance à dosage différentiel, caractérisé en ce que les cellules de pesée de la balance à dosage différentiel sont reliées à un circuit d'exploitation, qui comporte au moins un circuit à mémoire (8) et un circuit à comparateur (9), le circuit à mémoire (8) servant à mémoriser une courbe de référence, tandis que le circuit à comparateur 9 est conçu de manière à comparer la courbe de poids du système de pesée à la courbe de référence et, en cas de dépassement d'un écart déterminé, produit un signal qui sert à représenter un défaut du dispositif de fermeture.

8. Dispositif destiné à contrôler des dispositifs de remplissage dans des balances à dosage différentiel pour la mise en oeuvre du procédé selon l'une des revendications 1 à 6, dans lequel il est prévu une balance à dosage différentiel avec réservoir, qui est placé au-dessous d'un pré-réservoir et qui est relié à celui-ci par un dispositif de fermeture, le pré-réservoir n'ayant pas de liaison par force avec la balance à dosage différentiel, caractérisé en ce qu'il est prévu un dispositif d'exploitation qui comporte un différenciateur (10), un filtre (11), un circuit de calcul (12), un circuit d'identification (13), un circuit à filtre (14), une mémoire de valeur caractéristique (15), un comparateur (16) et un deuxième circuit à comparateur (17), qui sont conçus de manière à comparer les valeurs caractéristiques de la courbe de poids du système de pesée aux valeurs çaractéristiques d'un modèle mathématique servant de courbe de référence et à signaler un défaut du dispositif de fermeture, lorsqu'un écart donné est dépassé lors de la comparaison.

9. Dispositif destiné à contrôler des dispositifs à clapet de remplissage pour des balances à dosage différentiel selon l'une des revendications 7 ou 8, caractérisé en ce que le dispositif d'exploitation est conçu de manière qu'à partir des valeurs de mesure obtenues il est déterminé pendant l'opération de remplissage et de dosage, en tenant compte de la courbe de référence, la fin de la période de remplissage, à cet instant pouvant être produit un signal qui sert à passer du dosage volumétrique au dosage gravimétrique.
